# EUROPÄISCHE PATENTSCHRIFT

(11) **EP 2 228 700 B1**
(45) Veröffentlichungstag und Bekanntmachung des Hinweises auf die Patenterteilung: **29.02.2012**
(21) Anmeldenummer: 09155106.9
(22) Anmeldetag: 13.03.2009
(51) Int. Cl.: G05B 19/418, G05B 19/042

(54) **Vorrichtung zur Messung von elektrischen Kenngrössen der Energieversorgung in einem vernetzten Automatisierungssystem**
Device for measuring electrical parameters of the energy supply in an automation network
Dispositif pour mesurer des paramètres électriques de l' approvisionnement d' énergie dans un système d' automatisation en réseau

(43) Veröffentlichungstag der Anmeldung: 15.09.2010
(73) Patentinhaber: Siemens Aktiengesellschaft, 80333 München (DE)
(72) Erfinder: August, Joachim, 90482 Nürnberg (DE); Brousek, Norbert, 90766 Fürth (DE); Jöhnßen, Oliver, 91058 Erlangen (DE); Ohlmann, Joachim, 91074 Herzogenaurach (DE)

(56) Entgegenhaltungen:
- WO-A-2008/006322
- US-A1- 2002 120 425

## Beschreibung

Die Erfindung betrifft ein vernetztes industrielles Automatisierungssystem mit einer Zentraleinheit, woran Betriebsmittel einer technischen Anlage über einen Feldbus angekoppelt sind, und mit Last- und Systemstromversorgungen zur Energieversorgung der Betriebsmittel.

Bei Automatisierungssystemen, die z.B. in der chemischen und pharmazeutischen Industrie eingesetzt werden zum Betrieb von wechselnden Chargenfertigungen, Batch Prozesse genannt, ist der Bedarf an elektrischer Energie zur Speisung der jeweils beteiligten Betriebsmittel der technischen Anlage u.U. schwankend. Dabei müssen als Betriebsmittel besonders im Feld verteilte Aktoren und Sensoren mit elektrischer Energie versorgt werden. Aber auch die Steuerungskomponenten, wie z.B. Zentraleinheiten und Feldbusse, und gegebenenfalls im Prozess verteilt angeordnete zwischengeschaltete lokale Steuergeräte müssen mit elektrischer Energie versorgt werden. Abhängig z.B. von den jeweiligen Rezepturen müssen zur Synthetisierung bestimmter Stoffe nämlich u.U. unterschiedliche technologische Einheiten einer komplexen Fertigungsanlage, wie z.B. einer Raffinerie, zusammengeschaltet werden, um ein bestimmtes Zwischen- oder Endprodukt zu synthetisieren. Hierbei können bei den benötigten Betriebsmitteln für bestimmte Zeiträume stark schwankende Verbrauchswerte an elektrischer Energie auftreten, um z.B. chemische Reaktoren, Großantriebe, Mischer, induktive Heizungen und vieles mehr betreiben zu können.

Um z.B. auf einen Anstieg an elektrischer Speiseenergie etwa bei einem Rezepturwechsel in einer prozesstechnischen Anlage rechtzeitig reagieren und notwendige Umschaltungen bei der Energieversorgung vornehmen zu können, ist eine möglichst genaue Erfassung des aktuellen Verbrauches an elektrischer Energie von möglichst allen in der Anlage verteilten Betriebsmitteln erforderlich. Hierdurch können eventuelle Versorgungsmängel von Teilbereichen der Anlage, aber auch temporäre Überlastungen von einzelnen Aggregaten erkannt werden. Weiterhin ist auch ein auf den jeweiligen Belastungszustand angepasster effizienter Einsatz unterschiedlicher Energiequelle im Sinne eines Lastmanagements gewünscht.

Hierzu ist es bekannt, diskrete Messgeräte an wesentlichen Verbrauchsstellen, Einspeise- und Verteilungspunkten von elektrischer Energie einzubauen. Unter Umständen werden derartige Messgeräte auch nur temporär an bestimmten Stellen einer technologischen Anlage platziert, um z.B. Lastprofile, Energieverbrauchsspitzen und dergleichen zu protokollieren. In der Regel ist damit aber nur eine überschlagsmässige Messung des Verbrauchs von elektrischer Energie möglich, da ein derartiges Messgerät nur zusammenhängende technologische Cluster von gleichzeitig gespeisten Betriebsmitteln ausmessen kann. Eine variable Zusammenstellung von ausgewählten Betriebsmitteln zu einzelnen Clustern, die dann eine individuelle Bedienung und Beobachtung des dortigen Bedarfs und Verbrauchs an elektrischer Energie ermöglichen, ist auf diese Weise nicht möglich. Vielmehr ist in der Regel eine derartige Gruppierung nur nach vorherigen u.U. umfangreichen Umbauarbeiten in der technischen Anlage möglich.

In der US 2002/0120425 A1 wird eine Einrichtung beschrieben, womit die Verbrauchswerte von Verbrauchsstoffen, wie z.B. Wasser, Sauerstoff, Ammoniak, Kohlenmonoxid usw., welche von den Betriebsmitteln einer Fertigungsanlage zur Herstellung von Halbleitern benötigt oder abgegeben werden, und die von technischen Prozesseinrichtungen der Fertigungsanlage, wie z.B. Heizelementen, verursachten Verbrauchswerte an elektrischer Energie erfasst und überwacht werden können. Hierzu ist ein Steuerungs- und Überwachungsprogramm mit einer zusätzlichen "Green Tool Software" ausgestattet, womit die Messwerte von ausgewählten physikalischen Größen der Fertigungsanlage zyklisch erfasst, mit einem Zeitstempel versehen und zu Summenwerten zusammengefasst werden können. Die Messwerte können dann separat oder kumuliert über mehrere Stationen der Fertigungsanlage ausgewertet und angezeigt werden.

Der Erfindung liegt die Aufgabe zu Grunde ein Automatisierungssystem anzugeben, welches eine möglichst lokale Erfassung des Verbrauchs an elektrischer Energie durch die einzelnen Betriebsmittel einer technischen Anlage und eine möglichst flexible Auswertung der Messergebnisse ermöglicht.

Die Aufgabe wird gelöst mit den Merkmalen im kennzeichnenden Teil von Anspruch 1.

Die Erfindung bietet den besonderen Vorteil, dass die elektrischen Kenngrößen in der Energiezuführung zu den einzelnen Betriebsmitteln, woraus auch ohne weiteres deren Verbrauchswerte ableitbar sind, lokal ohne erheblichen Aufwand erfasst werden können und ohne dass hierzu in die Betriebsmittel eingegriffen werden muss. Hierzu sind vielmehr die in der Regel den einzelnen Betriebsmitteln separat zugeordneten lokalen Last- und Systemstromversorgungen besonders geeignet. Diese ermöglichen eine Erfassung unmittelbar am Eingang des jeweiligen Verbrauchers. Zur Umsetzung der Werte von Strom und Spannung auf der Seite der Zuführung von elektrischer Energie in Größenordnungen, die an das jeweilige Betriebsmittel angepasst sind, werden im Inneren von modernen Stromversorgungen, wie z.B. Schaltnetzteilen, bereits vielfach elektrische Kenngrößen messtechnisch erfasst, wie z.B. die Effektivwerte von Spannung U und Strom I, der Leistungsfaktor, der Wirkfaktor. Andererseits ist es mit wenig Aufwand möglich, gegebenenfalls nicht verfügbare elektrische Kenngrößen im Inneren einer Stromversorgung zu messen bzw. ableitbare Größen, wie den Energieverbrauch, bereits in einer aufbereiteten Form zur Verfügung zu stellen. Erfindungsgemäß werden diese Stromversorgungen mit Datenübertragungsmitteln ausgestattet, um elektrische Kenngrößen und gegebenenfalls durch Vorverarbeitung daraus abgeleitete Größen der Zentraleinheit des Automatisierungssystems zur weiteren Auswertung zur Verfügung zu stellen, besonders zur Ableitung der elektrischen Verbrauchswerte des von einer Stromversorgung jeweils gespeisten Betriebsmittels.

Erfindungsgemäß weist die Zentraleinheit weiterhin ein parametrierbares Messwerteerfassungsmodul auf. Hiermit können vorteilhaft übermittelte elektrische Kenngrößen der einzelnen Last- und Systemstromversorgungen anwendungsabhängig in Messwerteerfassungsgruppen zusammengefasst werden.

Die Erfindung ermöglicht somit neben einer Erfassung des Istwertes der elektrischen Energie jedes einzelnen Betriebsmittels der Anlage auch anwendungsabhängige Zusammenfassungen der Energieverbrauchswerte von ausgewählten Betriebsmitteln. Mit derartigen Clusterungen von Verbrauchern, die auch während des Betriebs der technischen Anlage dynamisch anpassbar sind, können aktuell benötigte Mengen an elektrischer Energie z.B. für die an einem aktuell laufenden Fertigungsprozess beteiligten Betriebsmittel messtechnisch genau erfasst werden. Dies ermöglicht es einem Anlagenbetreiber z.B. diese Energiemengen durch geeignete technische Maßnahmen schnell und u.U. auch kostengünstig bereitzustellen. Weiterhin können die Energiedaten Betriebsmittelgruppen so zugeordnet werden, dass u.U. Zeitpunkte für die Einleitung von Reparatur oder Instandsetzungsmaßnahmen abgeleitet werden können. Schließlich können mit dem erfindungsgemäßen Messwerteerfassungsmodul auch die zur Fertigung eines Produktes oder Zwischenproduktes benötigten elektrischen Energiedaten erfasst werden, so dass auch grundsätzlich die damit verbundenen Kosten ermittelbar sind.

Je nach Ausführung können die Mittel zur Messung und Datenübertragung von elektrischen Kenngrößen der Energiezuführung einer Last- und Systemstromversorgung modular an die jeweilige Last- und Systemstromversorgung angekoppelt oder direkt in deren Schaltungsaufbau integriert sein. Dabei bietet die erste Variante den Vorteil, dass die Mittel z.B. in Form eines Zusatzmoduls optional steckbar und somit beliebig nachrüstbar sind.

Die Erfindung ist ohne Einschränkungen sowohl bei Systemstromversorgungen als auch bei Laststromversorgungen anwendbar. Eine Systemstromversorgung wird zum Betrieb der Steuerung benötigt, speist also deren Elektronik und Komponenten, wie z.B. Zentraleinheiten, Feldbusmodule, lokale Steuergeräte, Repeater, Geräte zum Bedienen- und Beobachten, u.v.m.. Demgegenüber dient eine Laststromversorgung vorrangig zur Speisung von Sensoren und Aktoren, welche in der technischen Anlage verteilt eingebaut sind. Diese sind an die Steuerung angeschlossen und werden von dieser mit Stellsignalen beaufschlagt bzw. stellen Messsignale bereit.

In der Praxis sind Systemstromversorgungen häufig in der Steuerung bzw. in Steuerungskomponenten des Automatisierungssystems direkt integriert. Eine solche Stromversorgung ist erfindungsgemäß mit Mitteln zur Messung und Datenübertragung von elektrischen Kenngrößen ausgestattet, so dass die elektrischen Kenngrößen gemäß der Erfindung vorteilhaft direkt über die Datenschnittstelle der Steuerung bzw. der jeweiligen Steuerungskomponente an die Zentraleinheit übertragen werden. Die Kommunikationsanbindung von Systemstromversorgungen erfolgt somit vorteilhaft über das Automatisierungssystem selbst und den vorhandenen Feldbus.

Demgegenüber stellen Laststromversorgungen vielfach kompakte Geräte dar, welche u.U. auf Grund der zu übertragenden Leistungen z.B. über einen gekapselten Aufbau verfügen. Diese sind nicht immer mit einer Datenschnittstelle ausgestattet. Gemäß der Erfindung werden somit die von Laststromversorgungen erfassten elektrischen Kenngrößen vorteilhaft mit Hilfe von zusätzlichen Kommunikationsmitteln, wie z.B. einem in Form eines 10 - Link ausgeführten zusätzlichen Datenbus, an die Zentraleinheit übertragen.

Die Erfindung und weitere vorteilhafte Ausführungsformen werden nachfolgend an Hand der in den Figuren dargestellten Ausführungsbeispiele näher erläutert. Dabei zeigt
- FIG 1: die Topologie eines beispielhaften vernetzen Au- tomatisierungssystems, welches mit gemäß der Er- findung gestalteten Last- und Systemstromversor- gungen und einer Zentraleinheit mit parametrier- barem Messwerteerfassungsmodul ausgestattet ist, und
- FIG 2: das Blockschaltbild einer vorteilhaften Last- stromversorgung für ein Automatisierungssystem gemäß der Erfindung.

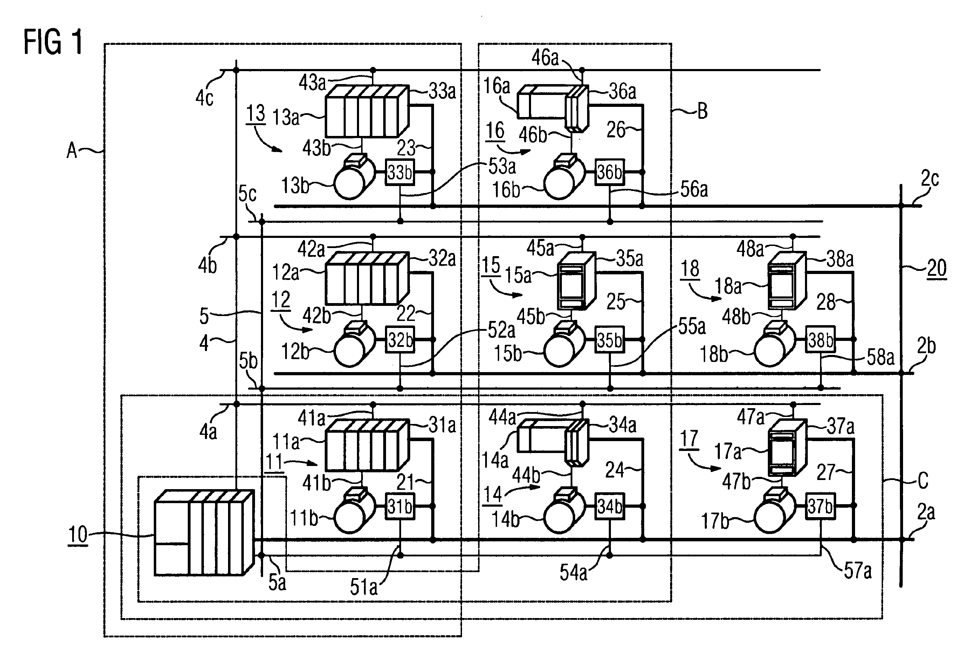

Das in FIG 1 dargestellte beispielhafte vernetze Automatisierungssystem weist eine Zentraleinheit 10 auf, z.B. eine speicherprogrammierbare Steuerung. Diese verwaltet ein vorzugsweise mit programmtechnischen Mitteln ausgeführtes parametrierbares Messwerteerfassungsmodul. An dieses werden erfindungsgemäß die von den einzelnen Last- und Systemstromversorgungen der Anlage erfassten elektrischen Kenngrößen, z.B. Energieverbrauchswerte, übermittelt und anwendungsabhängig in Messwerteerfassungsgruppen zusammenfasst.

Hierzu verfügt das in FIG 1 dargestellte Automatisierungssystem beispielhaft über acht lokale Steuerungsgruppen 11 - 18. In jeder Steuerungsgruppe ist als Betriebsmittel der technischen Anlage symbolisch ein Aktor und/oder Sensor 11b - 18b dargestellt, welcher von lokalen Steuergeräten 11a - 18a, z.B. untergeordnete Steuerungen bzw. einem Schnittstellenbaustein angesteuert wird.

Datentechnisch sind die Aktoren bzw. Sensoren 11b - 18b indirekt über das jeweils vorgeschaltete lokale Steuergerät 11a - 18a und einen als Datenübertragungsmittel dienenden Feldbus 4 an die Zentraleinheit 10 angekoppelt. Bei der beispielhaften Topologie von Figur 1 weist der Feldbus 4 eine direkt mit der Zentraleinheit 10 verbundene Datenhauptleitung 4 auf, von der horizontal wiederum drei regionale Datenabzweigleitungen 4a, 4b, 4c abgehen. Von diesen gehen schließlich lokale Datenstichleitungen 41a - 48a bis zum lokalen Steuergerät 11a - 18a der jeweiligen Steuerungsgruppe 11 - 18 ab. Die datentechnische Ankopplung der Aktoren bzw. Sensoren 11b - 18b an das lokale Steuergerät 11a - 18a erfolgt schließlich über lokale Feldsignalleitungen 41b - 48b.

Zur Speisung aller Komponenten des Automatisierungssystems von FIG 1 mit elektrischer Energie ist eine Energiezuführung beispielhaft in Form einer zentralen Zuführleitung 20 vorhanden. Von dieser gehen beispielhaft horizontal drei regionale Abzweigleitungen 2a, 2b, 2c ab, von denen schließlich lokale Stichleitungen 21 - 28 zur Energiezuführung bis zu den Betriebsmitteln 11a - 18a und 11b - 18b einer jeden Steuerungsgruppe 11 - 18 führen. Dort sind im Beispiel der FIG 1 jeweils Paare an System- und Laststromversorgungen 31a, 31b bis 38a, 38b vorhanden, wobei die Systemversorgungen 31a - 38a beispielsweise in die jeweiligen lokalen Steuergeräte 11a - 18a integriert und die Laststromversorgungen den jeweiligen Aktoren und/oder Sensoren 11b - 18b in den Stichleitungen 21 - 28 unmittelbar vorgeschaltet sind.

Erfindungsgemäß erfassen die einzelnen Last- und Systemstromversorgungen 31b - 38b und 31a - 38a der Anlage die elektrischen Kenngrößen der von Ihnen gespeisten Betriebsmittel, insbesondere deren Energieverbrauchswerte, und übermitteln diese an die Zentraleinheit 10. Dies erfolgt im Beispiel der FIG 1 bei den Systemstromversorgungen 31a - 38a erfindungsgemäß durch Nutzung des vorhandenen Feldbusses 4 und dessen Komponenten, d.h. den Datenstichleitungen 41a - 48a und Datenabzweigleitungen 4a, 4b, 4c. Für die von den Laststromversorgungen 31b - 38b bereitgestellten elektrischen Kenngrößen der nachgeschalteten Betriebsmittel ist im beispielhaften Automatisierungssystem der FIG 1 erfindungsgemäß ein separater Datenbus mit einer Datenhauptleitung 5, wiederum drei horizontalen regionale Datenabzweigleitungen 5a, 5b, 5c und lokalen Datenstichleitungen 51a - 58a zu den einzelnen Laststromversorgungen einer jeder Steuerungsgruppe vorhanden.

Ober diese Datenübertragungswege werden die von den einzelnen Last- und Systemstromversorgungen 31b, 38b bzw. 31a, 38a erfassten elektrischen Kenngrößen der nachgeschalteten Betriebsmittel an die Zentraleinheit 10 übertragen, und können von dessen Messwerteerfassungsmodul anwendungsabhängig in Messwerteerfassungsgruppen zusammenfasst werden. Im Beispiel der FIG 1 sind hierzu drei beispielhafte Messwerterfassungsgruppen A bzw. B bzw. C gezeigt. Insbesondere die Istwerte des Verbrauchs an elektrischer Energie der in den einzelnen Gruppen zusammengefassten Betriebsmitteln 11a, 11b bis 13a, 13b bzw. 14a, 14b bis 16a, 16b bzw. 11a, 11b, 14a, 14b, 17a, 17b lokal präzise zuordenbare messtechnisch erfasst werden. Diese Werte stehen nun in der Zentraleinheit 10 zu verschiedensten Zwecken feingranular zur Verfügung. Sind z.B. die übermittelten elektrische Kenngrößen vor deren Übertragung von der jeweiligen Last- und Systemstromversorgung mit einem Zeitstempel versehen, welcher den Moment der messtechnischen Erfassung kennzeichnet, so können Last- und Verbrauchsprofile beliebiger Gruppen von Betriebsmitteln der technischen Anlage erstellt werden. Diese können dann z.B. zur Steuerung der Bereitstellung der elektrischen Energie, aber auch zu Abrechnungszwecken genutzt werden.

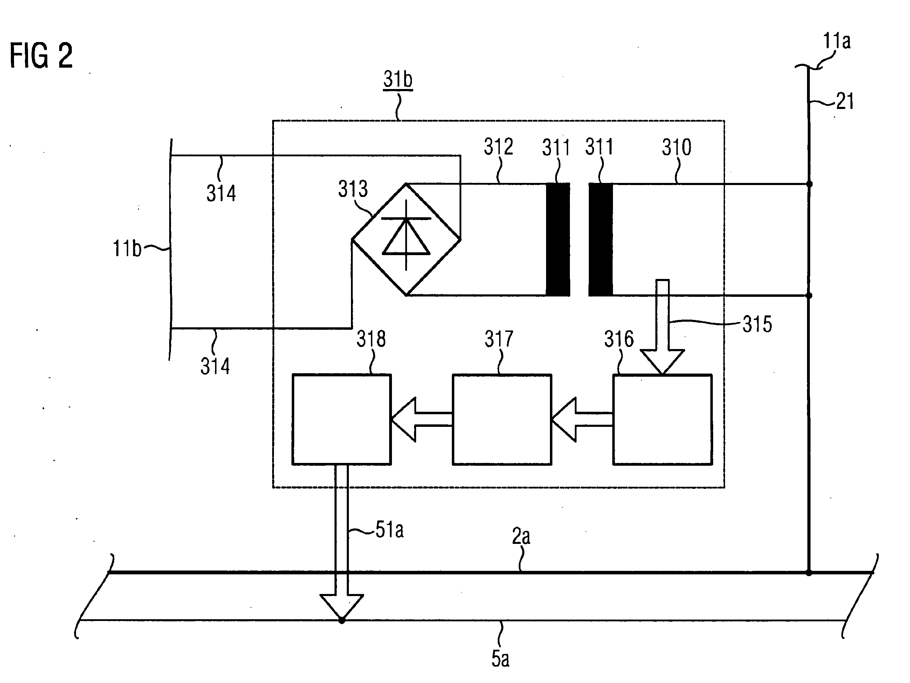

Schließlich zeigt FIG 2 das Blockschaltbild einer vorteilhaften, gemäß der Erfindung ausgeführten Stromversorgung am Beispiel der Laststromversorgung 31b in der lokalen Steuerungsgruppe 11. Diese weist einen Eingangsspannungskreis 310 mit einem Trenntrafo 311 auf, welcher über die lokale Energieversorgungsstichleitung 21 gespeist wird. Der Ausgangsspannungskreis 312 des Trenntrafos 311 ist beispielsweise einem Umrichter 313 zugeführt, welcher nach entsprechenden Anpassungen der Werte von Strom- und Spannung über einen Lastanschluss 314 den Aktor 11b versorgt.

Die Elemente zur Messsignalerfassung 315 greifen die elektrischen Kenngrößen in FIG 2 beispielhaft im Eingangsspannungskreis 310 der Stromversorgung 31b ab. Vorteilhaft werden diese einer Baugruppe zur Messsignalvorverabeitung 316, einer Baugruppe zur Messsignalzwischenspeicherung 317 und schließlich einer Datenübertragungsbaugruppe 318 zur Einspeisung in die Datenstichleitung 51a und die Datenabzweigleitung 5a zugeführt.

## Patentansprüche

1. Vernetztes industrielles Automatisierungssystem mit
a) einer Zentraleinheit (10), woran Betriebsmittel (11a - 18a; 11b - 18b) einer technischen Anlage über einen Feldbus (4; 4a-4c; 41a-48a) angekoppelt sind, und mit
b) Last- und Systemstromversorgungen (31a, 31b - 38a, 38b) zur Energieversorgung (20; 2a-2c; 21-28) der Betriebsmittel (11a - 18a; 11b - 18b), wobei
c) die Last- und Systemstromversorgungen (31a, 31b - 38a, 38b) ausgestattet sind mit
c1) Mitteln (315, 316, 317) zur Messung von elektrischen Kenngrößen der Energiezuführung (20) und mit
c2) Datenübertragungsmitteln (318) zur Übertragung der elektrischen Kenngrößen an die Zentraleinheit (10), wobei
d) die Zentraleinheit (10) ein parametrierbares Messwerteerfassungsmodul aufweist, so dass die übermittelten elektrischen Kenngrößen der einzelnen Last- und Systemstromversorgungen (31a, 31b - 38a, 38b) anwendungsabhängig in Messwerteerfassungsgruppen (A, B, C) zusammenfassbar sind, **dadurch gekennzeichnet, dass**
e) die Datenübertragungsmittel (318) elektrische Kenngrößen der Energiezuführung (20) bei
e1) Systemstromversorgungen (31a - 38a) über den Feldbus (4; 4a-4c; 4; 1a-48a) und bei
e2) Laststromversorgungen (31b - 38b) über einen separaten Datenbus (5; 5a-5c; 51a - 58a) an die Zentraleinheit (10) übertragen.

2. Automatisierungssystem nach Anspruch 1, mit unterlagerten Aktoren und/oder Sensoren (11b - 18b) als Betriebsmittel der technischen Anlage.

3. Automatisierungssystem nach Anspruch wobei die unterlagerten Aktoren und/oder Sensoren (11b - 18b) über zwischengeschaltete lokale Steuergeräte (11a - 18a) als Betriebsmittel der technischen Anlage an die Zentraleinheit (10) angekoppelt sind.

4. Automatisierungssystem nach einem der vorangegangenen Ansprüche, wobei die Last- und Systemstromversorgungen (31a, 31b - 38a, 38b) elektrische Kenngrößen vor deren Übertragung an die Zentraleinheit (10) mit einem Zeitstempel versehen.

5. Automatisierungssystem nach einem der vorangegangenen Ansprüche , mit einem I/O-Link als separaten Datenbus zur Übertragung von elektrischen Kenngrößen der Energiezuführung (20) von Laststromversorgungen (31b - 38b) an die Zentraleinheit (10).

6. Automatisierungssystem nach einem der vorangegangen Ansprüche, wobei die Mittel zur Messung und Datenübertragung von elektrischen Kenngrößen der Energiezuführung (20) einer Laststromversorgung (31b -38b) modular an die jeweilige Laststromversorgung ankoppelbar sind.

7. Automatisierungssystem nach einem der vorangegangen Ansprüche, wobei die Mittel zur Messung und Datenübertragung von elektrischen Kenngrößen der Energiezuführung (20) einer Systemstromversorgung (31a - 38a-) in die jeweilige Systemstromversorgung integriert sind.

## Claims

1. Networked industrial automation system having
a) a central processing unit (10) to which operating resources (11a - 18a; 11b - 18b) of a technical installation are coupled via a field bus (4; 4a-4c; 41a-48a), and having
b) load and system power supplies (31a, 31b - 38a, 38b) for supplying energy (20; 2a-2c; 21-28) to the operating resources (11a - 18a; 11b - 18b), wherein
c) the load and system power supplies (31a, 31b - 38a, 38b) are equipped with
c1) means (315, 316, 317) for measuring electrical parameters of the energy supply (20) and with
c2) data transmission means (318) for transferring the electrical parameters to the central processing unit (10), wherein
d) the central processing unit (10) has a parameterisable measured value acquisition module enabling the transmitted electrical parameters of the individual load and system power supplies (31a, 31b - 38a, 38b) to be combined as a function of application into measured value acquisition groups (A, B, C),
**characterised in that**
e) the data transmission means (318) transfer electrical parameters of the energy supply (20) to the central processing unit (10)
e1) via the field bus (4; 4a-4c; 4; 1a-48a) in the case of system power supplies (31a - 38a) and
e2) via a separate data bus (5; 5a-5c; 51a - 58a) in the case of load power supplies (31b - 38b).

2. Automation system according to claim 1, having subordinate actuators and/or sensors (11b - 18b) as operating resources of the technical installation.

3. Automation system according to claim 2, wherein the subordinate actuators and/or sensors (11b - 18b) are coupled to the central processing unit (10) as operating resources of the technical installation via intermediately connected local control devices (11a - 18a).

4. Automation system according to one of the preceding claims, wherein the load and system power supplies (31a, 31b - 38a, 38b) provide electrical parameters with a timestamp prior to their transfer to the central processing unit (10).

5. Automation system according to one of the preceding claims, having an I/O link as a separate data bus for transferring electrical parameters of the energy supply (20) of load power supplies (31b - 38b) to the central processing unit (10).

6. Automation system according to one of the preceding claims, wherein the means for measuring and data transmission of electrical parameters of the energy supply (20) of a load power supply (31b - 38b) can be coupled in modular fashion to the respective load power supply.

7. Automation system according to one of the preceding claims, wherein the means for measuring and data transmission of electrical parameters of the energy supply (20) of a system power supply (31a - 38a) are integrated into the respective system power supply.

## Revendications

1. Système d'automatisation industrielle en réseau comprenant
a) une unité ( 10 ) centrale à laquelle des moyens ( 11a à 18a ; 11b à 18b ) de service d'une installation technique sont couplés par un bus sur site, et comprenant
b) des alimentations ( 31a, 31b à 38a, 38b ) de charge et de système en courant pour l'alimentation ( 20 ; 2a à 2c ; 21 à 28 ) en courant des moyens ( 11a à 18a ; 11b à 18b ) de service, dans lequel
c) les alimentations ( 31a, 31b à 38a, 38b ) de charge et de système en courant sont équipées de
c1) moyens ( 315, 316, 317 ) de mesure de caractéristiques électriques de l'apport ( 20 ) de courant et
c2) de moyens ( 318 ) de transmission de donnée pour la transmission des caractéristiques électriques à l'unité ( 10 ) centrale,
dans lequel
d) l'unité ( 10 ) centrale comporte un module paramétrable de détection de valeur de mesure de manière à pouvoir rassembler les grandeurs électriques transmises des diverses alimentations ( 31a, 31b à 38a, 38b ) de charge et de système en fonction de l'application en des groupes ( A, B, C ) de détection de valeur de mesure, **caractérisée en ce que**
e) les moyens ( 318 ) de transmission de données transmettent à l'unité ( 10 ) centrale des caractéristiques électriques de l'apport ( 20 ) de courant pour
e1) des alimentations ( 31a à 38a ) de système en courant par le bus ( 4 ; 4a à 4c ; 4, 1a à 48a ) sur site et
e2) pour des alimentations ( 31b à 38b ) de charge en courant par un bus ( 5 ; 5a à 5c ; 5, 51a à 58a ) de données distinct.

2. Système d'automatisation suivant la revendication 1, ayant des actionneurs et/ou des capteurs ( 11b à 18b ) subordonnés comme moyen de service de l'installation technique.

3. Système d'automatisation suivant la revendication 2, dans lequel les actionneurs et/ou les capteurs ( 11b à 18b ) subordonnés sont couplés à l'unité ( 10 ) centrale par des appareils ( 11a à 18a ) de commande locaux montés intermédiairement en tant que moyen de service de l'installation technique.

4. Système d'automatisation suivant l'une des revendications précédentes, dans lequel les alimentations ( 31b à 38a, 38b ) de charge et de système en courant munissent les caractéristiques électriques d'une datation avant leur transmission à l'unité ( 10 ) centrale.

5. Système d'automatisation suivant l'une des revendications précédentes, comprenant une liaison I/O comme bus de données distinct pour la transmission de caractéristiques électriques de l'apport ( 20 ) de courant des alimentations ( 31b à 38b ) de charge en courant à l'unité ( 10 ) centrale.

6. Système d'automatisation suivant l'une des revendications précédentes, dans lequel les moyens de mesure et de transmission de données de caractéristiques électriques de l'apport ( 20 ) de courant d'une alimentation ( 31b à 38b ) de charge en courant peuvent être couplées modulairement à l'alimentation de charge respective en courant.

7. Système d'automatisation suivant l'une des revendications précédentes, dans lequel les moyens de mesure et de transmission de données de caractéristiques électriques de l'apport ( 20 ) de courant d'une alimentation ( 31a à 38a ) de système en courant sont intégrés dans l'alimentation de système respectif en courant.
